# EUROPÄISCHE PATENTSCHRIFT

(11) **EP 3 305 452 B1**
(45) Veröffentlichungstag und Bekanntmachung des Hinweises auf die Patenterteilung: **21.08.2019**
(21) Anmeldenummer: 17189522.0
(22) Anmeldetag: 06.09.2017
(51) Int. Cl.: B23K 1/08, B23K 1/20, B23K 3/06, B23K 3/08, H05K 3/34

(54) **LÖTANLAGE AUFWEISEND EINE LÖTEINRICHTUNG MIT EINER VERFAHREINRICHTUNG ZUM UNABHÄNGIGEN VERFAHREN DER LÖTEINRICHTUNG**
SOLDERING APPARATUS HAVING A SOLDERING DEVICE WITH A DRIVING DEVICE FOR DRIVING INDEPENDENTLY THE SOLDERING DEVICE
INSTALLATION DE BRASAGE AYANT UN DISPOSITIF DE BRASAGE AVEC UN SYSTÈME DE CONDUITE POUR CONDUIRE INDEPENDEMMENT LE DISPOSITIF DE BRASAGE

(30) Priorität: 05.10.2016 DE 102016118788
(43) Veröffentlichungstag der Anmeldung: 11.04.2018
(73) Patentinhaber: Ersa GmbH, 97877 Wertheim (DE)
(72) Erfinder: KRESSMANN, Richard, 97299 Zell am Main (DE)
(74) Vertreter: DREISS Patentanwälte PartG mbB

(56) Entgegenhaltungen:
- DE-A1-102014 110 720
- JP-A- S 575 396
- JP-A- H10 156 527
- JP-A- 2000 223 827
- JP-A- 2008 109 033
- JP-A- 2010 207 895

## Beschreibung

Die Erfindung betrifft eine Lötanlage mit einer Löteinrichtung gemäß dem Oberbegriff des Anspruchs 1 (siehe, z.B., DE 10 2014 110 720 A1).

Derartige Löteinrichtungen oder Löttiegel sind aus dem Stand der Technik vielfach bekannt. Aus dem Stand der Technik bekannte Löttiegel weisen üblicherweise eine hohe Gesamtmasse von etwa 40 kg bei einem vergleichsweise großen Volumen auf. Solche vergleichsweise großen Löttiegel zum selektiven Wellenlöten werden aufgrund der hohen Massen bislang lediglich mit bekannten Achsantrieben im Arbeitsraum einer Lötanlage zum selektiven Wellenlöten bewegt. Dabei ist es beispielsweise bekannt, als Achsantrieb einen Riemenantrieb, einen Spindelantrieb, einen Zahnstangen-/Ritzelantrieb oder einen Linearmotor bzw. Lineardirektantrieb zu verwenden. Zum einen sind diese Achsantriebe vergleichsweise teuer. Zum anderen wird durch die Verwendung dieser Achsantriebe und durch das vergleichsweise große Volumen der Löttiegel das Einsatzgebiet der Löttiegel und der Lötanlagen stark eingeschränkt, so dass die bekannten Lötanlagen vergleichsweise "unflexibel" einsetzbar sind. Aufgrund einer immer höher werdenden Variantenvielfalt der zu verlötenden Leiterplatten und der zu verlötenden Bauteile, sowie einer Reduzierung der Chargengröße bis hin zur Stückzahl 1 ist eine erhöhte Flexibilität sinnvoll und gewünscht. Gerade in engen Arbeitsbereichen kann mit den aus dem Stand der Technik bekannten Löttiegeln und Lötanlagen eine Bearbeitung nicht realisiert werden.

Aus der JP H10 156527A ist eine Lötanlage mit Merkmalen des Oberbegriffs des Patentanspruchs 1 bekannt. Die Löteinrichtung ist dort mittels eines Roboterarms frei im Raum bewegbar. Aus diesem Dokument ist ebenfalls bekannt, eine Verfahreinrichtung mit zwei Elektromotoren vorzusehen, die Spindelstangen antreiben, über welche Achsen, die an der Löteinrichtung befestigten sind, in X- und Y-Richtung zu verfahren.

Aus der JP 2000 223827A und der JP S57 5396A sind weitere Lötanlage bekannt, bei denen die Löteinrichtung in einer Arbeitsebene verfahrbar ist.

Weitere Löteinrichtungen sind aus der DE 10 2014 110 720 A1, der JP 2010 207895A und der JP 2008 109033A bekannt.

Der Erfindung liegt daher die Aufgabe zugrunde, eine Lötanlage bereitzustellen, die einerseits kostengünstig herstellbar und andererseits flexibel einsetzbar sind.

Diese Aufgabe wird durch eine Lötanlage mit den Merkmalen des Anspruchs 1 gelöst. Eine derartige Löteinrichtung zeichnet sich dadurch aus, dass die Löteinrichtung eine Verfahreinrichtung aufweist, die an der Löteinrichtung angeordnet ist und die zum unabhängigen Verfahren der Löteinrichtung in einem Arbeitsraum ausgelegt ist, wobei die Verfahreinrichtung zum unabhängigen Verfahren der Löteinrichtung in einer X-/Y-Ebene, d.h. in einer Ebene orthogonal zur Z-Achse ausgebildet ist. Die Lötanlage weist den Arbeitsraum auf, der einen in einer X-/Y-Ebene angeordneten Maschinentisch aufweist, wobei diese X-/Y-Ebene orthogonal zur Z-Achse ausgebildet ist. Somit kann durch Verfahren einer als Löttiegel ausgebildeten Löteinrichtung ein Verfahrweg eines Lötprogramms realisiert werden.

Gemäß einer ersten vorteilhaften Weiterbildung der Löteinrichtung der Lötanlage gemäß der Erfindung ist vorgesehen, dass die Löteinrichtung ein Oberteil und ein Unterteil aufweist, wobei das Oberteil lösbar mit dem Unterteil verbindbar ist und das Aufnahmemittel und die Düse aufweist, wobei im Oberteil ein Förderkanal der Pumpe angeordnet ist, der zumindest abschnittsweise entlang einer Kreisbahn verläuft, und wobei im Unterteil eine Einrichtung zur Erzeugung eines bewegten Magnetfelds der Lotpumpe angeordnet ist, die wenigstens einen Magneten, insbesondere wenigstens einen Permanentmagneten, umfasst und derart ausgelegt ist, dass der Magnet entlang des Förderkanals bewegt wird. Als besonders vorteilhaft hat es sich dabei herausgestellt, wenn die Verfahreinrichtung insbesondere am Unterteil angeordnet ist. Besonders vorteilhaft ist es dabei, wenn der Förderkanal einen Einlass und einen Auslass aufweist, wobei der Einlass fluidisch mit dem Aufnahmemittel verbunden ist und wobei der Auslass fluidisch mit der Düse verbunden ist. Somit kann Flüssigkeit, insbesondere flüssiges Lot mit der Pumpe, die durch den Förderkanal und die Einrichtung zur Erzeugung eines bewegten Magnetfelds gebildet wird, vom Aufnahmemittel zur Düse gefördert werden. Weiterhin ist es vorteilhaft, wenn eine Verbindungseinrichtung vorgesehen ist, die zur lösbaren Verbindung des Oberteils und des Unterteils ausgelegt ist. Vorteilhafterweise umfasst die Verbindungseinrichtung dabei einen Bajonettverschluss und/oder einen Magnetverschluss. Ferner ist es denkbar, dass die Löteinrichtung eine Heizeinrichtung umfasst, die zumindest teilweise im Unterteil angeordnet ist und die zur Beheizung des Aufnahmemittels, insbesondere eines Lotreservoirs, ausgelegt ist. Somit kann ein im Lotreservoir aufbewahrtes Lot verflüssigt werden.

Eine weitere vorteilhafte Ausgestaltung der Löteinrichtung der Lötanlage gemäß der Erfindung sieht vor, dass die Verfahreinrichtung ein Fahrwerk aufweist, das an der Löteinrichtung angeordnet ist, wobei wenigstens ein Rad vorgesehen ist, das mit dem Fahrwerk verbunden ist. Somit kann vorgesehen sein, dass die Löteinrichtung selbstfahrend ausgebildet ist.

Als besonders vorteilhaft hat es sich dabei erwiesen, wenn eine Antriebseinrichtung vorgesehen ist, die zum Antreiben des wenigstens einen Rads ausgebildet ist. Dabei ist denkbar, dass die Antriebseinrichtung bspw. als Elektromotor, Pneumatikmotor oder ähnliches ausgebildet ist.

Vorteilhafterweise weist die Verfahreinrichtung eine Mehrzahl von Rädern auf. Somit kann bspw. vorgesehen sein, dass am Umfang der Löteinrichtung im Bereich der der Düse abgewandten Unterseite drei über den Umfang gleichmäßig verteilt angeordnete Räder vorgesehen sind. Dabei ist es denkbar, dass die Antriebseinrichtung zum gemeinsamen und/oder unabhängigen Antreiben der Räder ausgebildet ist. Darüber hinaus ist es möglich, dass die Verfahreinrichtung derart ausgebildet ist, dass die einzelnen Räder unabhängig voneinander anlenkbar sind, so dass sämtliche Räder der Löteinrichtung unabhängig voneinander angetrieben und gelenkt werden können. Vorteilhafterweise weist die Verfahreinrichtung dazu eine Lenkeinrichtung auf, die zum unabhängigen Lenken eines oder mehrerer Räder ausgelegt ist. Es ist bspw. denkbar, dass die Lenkeinrichtung einen Antrieb, insbesondere einen Elektromotor und ein Getriebe aufweist, wobei von dem Antrieb ein Lenkgetriebe angesteuert werden kann, das zur Auslenkung der Räder in eine ausgelenkte Position ausgelegt ist.

Gemäß einer weiteren vorteilhaften Ausgestaltung ist es denkbar, dass die Verfahreinrichtung einen Antriebsabschnitt aufweist, der zumindest teilweise aus einem ferromagnetischen Material hergestellt ist, wobei der Antriebsabschnitt im Bereich eines der Düse abgewandten Bodens der Löteinrichtung angeordnet ist. Wenn die Verfahreinrichtung wenigstens einen derartigen Antriebsabschnitt aufweist, kann die Löteinrichtung bspw. in einer Lötanlage eingesetzt werden, die eine Einrichtung zur Erzeugung eines magnetischen Wanderfelds aufweist, wobei die Einrichtung zur Erzeugung eines magnetischen Wanderfelds in einer X-/Y-Ebene des Maschinentischs ausgelegt ist. Durch Erzeugen eines magnetischen Wanderfelds kann dann der Antriebsabschnitt aus ferromagnetischem Material und mit ihm der gesamte Löttiegel innerhalb der Lötanlage in der X-/Y-Ebene, d.h. orthogonal zur Auslassrichtung der Düse bzw. zur Z-Richtung verlagert werden.

Eine weitere vorteilhafte Ausgestaltung der Löteinrichtung der Lötanlage gemäß der Erfindung sieht vor, dass die Löteinrichtung ein Gesamtgewicht von etwa 0,5 kg bis etwa 5 kg, vorzugsweise von etwa 1 kg bis etwa 3,5 kg aufweist. Somit kann einerseits eine Antriebsleistung des die Löteinrichtung antreibenden Antriebs bzw. der die Löteinrichtung antreibenden Antriebe reduziert werden, wobei andererseits aufgrund der vergleichsweise geringen Massen der Löteinrichtungen eine Lagerung der Löteinrichtungen auf einem Maschinentisch mittels eines Luftkissens oder mittels einer Magnetschwebeeinrichtung derart ermöglicht werden kann, dass die Löteinrichtungen auf dem Maschinentisch mit keiner oder nahezu keiner Reibung gelagert werden können.

Weiterhin ist es vorteilhaft, wenn eine Zustelleinrichtung vorgesehen ist, die zum relativen Verlagern der Düse entlang der Z-Achse ausgebildet ist. Mit der Zustelleinrichtung kann die Lötdüse eines Löttiegels gegenüber einer zu bearbeitenden Leiterplatte aus einer Ruheposition in eine Lötposition verlagert werden. Dabei ist es denkbar, dass die Zustelleinrichtung elektrisch antreibbar ist. Besonders vorteilhaft ist es dabei, wenn die Zustelleinrichtung von einer insbesondere zentralen Steuereinrichtung einer Lötanlage ansteuerbar ist, so dass einzelne Löttiegel in ein laufendes Lötprogramm einer Lötanlage ein- und ausgekoppelt werden können.

Vorteilhafterweise weist die Lötanlage eine Steuereinrichtung auf, die zum Ansteuern der Verfahreinrichtung der wenigstens einen Löteinrichtung ausgelegt ist. Als besonders vorteilhaft hat es sich dabei ferner erwiesen, wenn die Steuereinrichtung zum Ansteuern der Zustelleinrichtungen der einzelnen Löteinrichtungen ausgebildet ist. Folglich können mit einer derartigen Steuereinrichtung einerseits zum Abfahren eines durch ein Lötprogramm definierten Verfahrwegs in der X-/Y-Ebene die Verfahreinrichtungen der als Löttiegel ausgebildeten Löteinrichtungen angesteuert werden, wobei andererseits durch Ansteuern der Zustelleinrichtungen ein Ein- und Auskoppeln der Löttiegel in ein jeweiliges Lötprogramm ermöglicht werden kann.

Als besonders vorteilhaft hat es sich dabei erwiesen, wenn eine Positionserkennungseinrichtung vorgesehen ist, die zur Positionserkennung der wenigstens einen Löteinrichtung im Arbeitsraum ausgelegt ist. Vorteilhafterweise ist die Positionserkennungseinrichtung zur Übermittlung von Positionsdaten, die Informationen über die jeweilige Position der einzelnen Löteinrichtungen der Lötanlage umfassen, an die Steuereinrichtung ausgelegt.

Dabei ist es insbesondere denkbar, dass die Positionserkennungseinrichtung wenigstens einen Sensor umfasst, der zur Positionserkennung der Löteinrichtung im Arbeitsraum ausgelegt ist, und/oder dass die Positionserkennungseinrichtung einen Laser und/oder eine Kamera umfasst. Als Positionserkennungseinrichtung können sämtliche Einrichtungen oder Vorrichtungen in Frage kommen, die zur automatisierten Entfernungs- und oder Positionserkennung von Objekten in Frage kommen.

Eine weitere besonders vorteilhafte Ausgestaltung der Lötanlage sieht vor, dass die Lötanlage wenigstens eine Einrichtung zur Erzeugung eines magnetischen Wanderfelds aufweist, wobei die Einrichtung zur Erzeugung eines magnetischen Wanderfelds in einer X-/Y-Ebene des Maschinentischs ausgelegt ist. Wenn die Verfahreinrichtung der Löteinrichtung einen Antriebsabschnitt aufweist, der zumindest teilweise aus einem ferromagnetischen Material hergestellt ist, wobei der Antriebsabschnitt im Bereich eines der Düse abgewandten Bodens der Löteinrichtung angeordnet ist, kann mittels der Einrichtung zur Erzeugung eines magnetischen Wanderfelds ein magnetisches Wanderfeld in der X-/Y-Ebene des Maschinentischs der Lötanlage erzeugt werden, wobei durch Bewegen des Wanderfelds der jeweilige Antriebsabschnitt und die mit dem Antriebsabschnitt verbundene Löteinrichtung in der X-/Y-Ebene verlagert werden kann. Durch Erzeugen eines magnetischen Wanderfelds kann dann der Antriebsabschnitt aus ferromagnetischem Material und mit ihm die gesamte Löteinrichtung innerhalb der Lötanlage in der X-/Y-Ebene, d.h. orthogonal zur Düse bzw. zur Z-Richtung verlagert werden.

Vorteilhafterweise ist wenigstens eine Energieübertragungseinrichtung vorgesehen, die zur Übertragung von elektrischer Energie zu der wenigstens einen Löteinrichtung ausgelegt ist. Dabei ist es denkbar, dass die Energieübertragungseinrichtung zur kabelgebundenen oder kabellosen Energieübertragung von elektrischer Energie zu der wenigstens einen Löteinrichtung ausgebildet ist.

Zur kabellosen Energieübertragung kann insbesondere vorgesehen sein, dass die Energieübertragungseinrichtung zur induktiven oder kapazitiven Energieübertragung ausgelegt ist.

Um eine möglichst reibungsfreie Lagerung der Löteinrichtung in der Lötanlage, insbesondere auf einem Maschinentisch der Lötanlage ermöglichen zu können, kann wenigstens ein Überdruckerzeuger vorgesehen sein, der zur Erzeugung eines Druckgases ausgelegt ist, wobei wenigstens eine Auslassdüse im Maschinentisch der Lötanlage angeordnet sein kann, wobei der Überdruckerzeuger fluidisch mit der wenigstens einen Auslassdüse verbunden ist. Vorteilhafterweise ist eine Mehrzahl von Auslassdüsen vorgesehen, so dass durch aus den Auslassdüsen ausströmendes Druckgas ein Luftkissen auf dem Maschinentisch erzeugt werden kann. Dabei ist es ferner möglich, dass ein Druckspeicher vorgesehen ist, der zur Speicherung eines inerten Druckgases bspw. von Stickstoff (N₂) ausgelegt. Es ist jedoch auch denkbar, dass die Löteinrichtungen selbst einen Überdruckerzeuger aufweisen, der zur Erzeugung eines Druckgases ausgelegt ist, wobei wenigstens eine Auslassdüse im Unterteil der Löteinrichtung angeordnet sein kann, so dass durch aus den Auslassdüsen der Löteinrichtung ausströmendes Druckgas ein Luftkissen gegenüber dem Maschinentisch erzeugt werden kann.

Weitere Einzelheiten und vorteilhafte Weiterbildungen der Erfindung sind der nachfolgenden Beschreibung zu entnehmen, anhand derer verschiedene Ausführungsformen der Erfindung näher beschrieben und erläutert sind.

Es zeigen:
Figur 1 eine erste Ausführungsform einer
erfindungsgemäßen Lötanlage in einer Schrägansicht;
Figur 2 eine zweite Ausführungsform einer erfindungsgemäßen Lötanlage in einer Seitenansicht;
Figur 3 die zweite Ausführungsform gemäß Figur 2 in einer Draufsicht;
Figur 4 eine schematische Seitenansicht der Löteinrichtung der erfindungsgemäßen Lötanlage;
Figur 5 eine schematische Ansicht eines Abschnitts der Löteinrichtung gemäß Figur 4; und
Figur 6 einen Förderkanal der Löteinrichtung gemäß Figur 4 in einer Draufsicht.

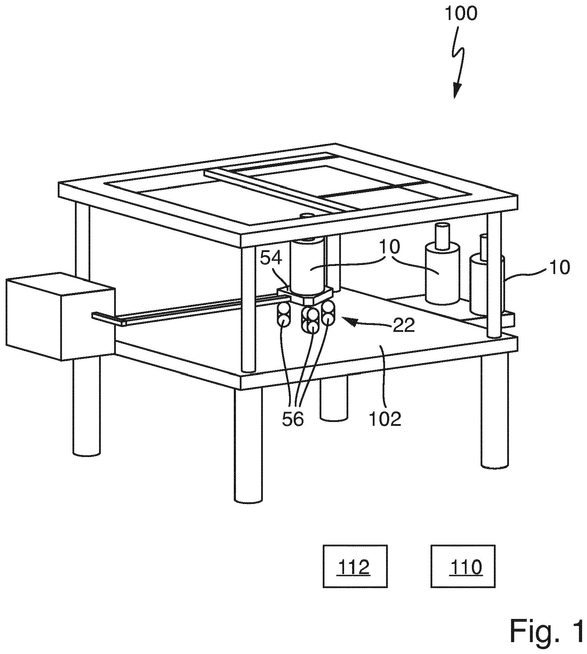

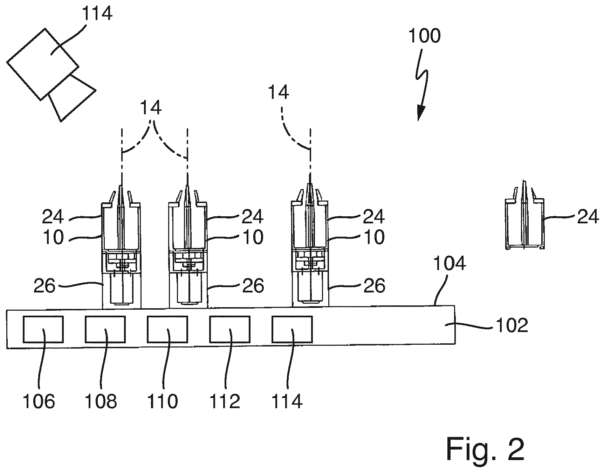

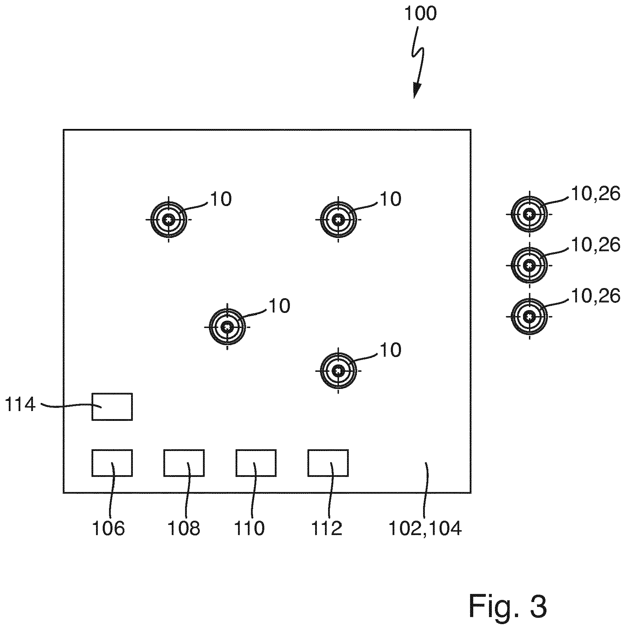

Figur 1 zeigt eine Ausführungsform einer erfindungsgemäßen Lötanlage 100 in einer Schrägansicht, wobei Figur 2 eine zweite Ausführungsform einer erfindungsgemäßen Lötanlage 100 in einer Seitenansicht zeigt, die in Figur 3 in einer Draufsicht gezeigt ist.

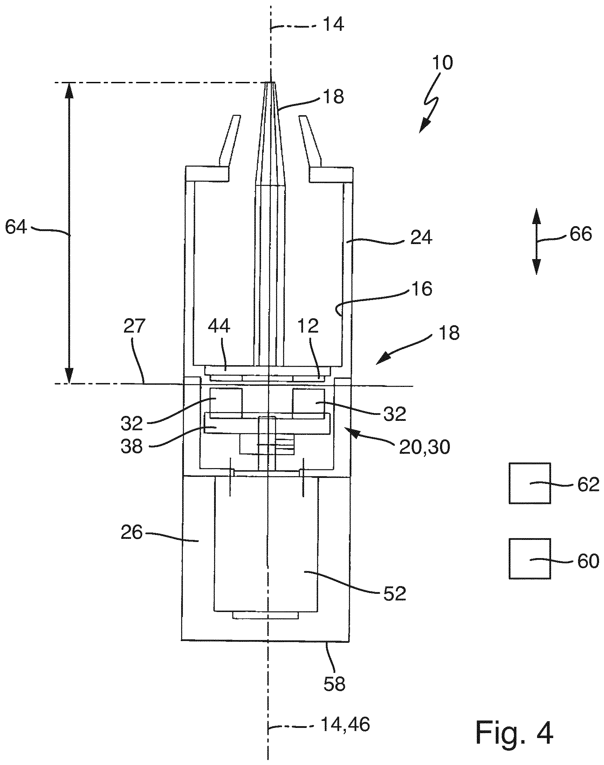

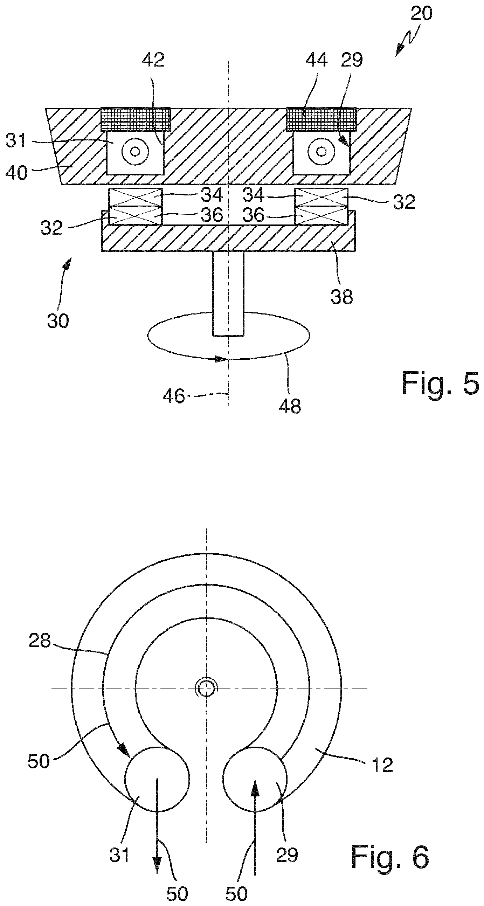

Figur 4 zeigt eine schematische Seitenansicht einer als Löttiegels 10 ausgebildeten Löteinrichtung der erfindungsgemäßen Lötanlage, insbesondere eines Löttiegels zum selektiven Wellenlöten, wobei Figur 5 vergrößert eine schematische Ansicht eines Abschnitts des Löttiegels 10 gemäß Figur 4 zeigt. In Figur 6 ist ferner ein Förderkanal 12 des Löttiegels 10 gemäß Figur 4 gezeigt. Sich in den Figuren entsprechende Bauteile und Elemente sind mit den sich entsprechenden Bezugszeichen gekennzeichnet.

Die in den Figuren 1 bis 3 gezeigten Lötanlagen 100 umfassen jeweils wenigstens einen Löttiegel 10, wie er in den Figuren 4 und 5 gezeigt ist. Die Lötanlagen 100 weisen dabei einen Maschinentisch 102 mit einem Arbeitsraum auf. Der Arbeitsraum weist, gemäß der Erfindung, eine in einer X-/Y-Ebene 104 liegende Fläche auf, wobei diese X-/Y-Ebene orthogonal zu einer Z-Achse 14 (vgl. Figur 4) ausgebildet ist. Somit kann durch Verfahren des Löttiegels 10 ein Verfahrweg eines Lötprogramms realisiert werden.

Die Löttiegel 10, die insbesondere als Löttiegel zum selektiven Wellenlöten ausgebildet sind, weisen ein in Figur 4 gezeigtes Lotreservoir 16 auf, das zur Aufbewahrung eines Lots, insbesondere eines flüssigen Lots, ausgelegt ist. Die Löttiegel 10 weisen ferner eine Lötdüse 18 und eine Lotpumpe 20 auf, die zum Fördern des Lots aus dem Lotreservoir 16 durch die Lötdüse 18 in Richtung der Z-Achse 14 ausgelegt sind.

Die Löttiegel 10 weisen ferner eine Verfahreinrichtung 22 auf, die am Löttiegel 10 angeordnet ist und die zum unabhängigen Verfahren des Löttiegels 10 im Arbeitsraum, insbesondere zum unabhängigen Verfahren des Löttiegels 10 in der X-/Y-Ebene 104, d.h. in einer Ebene orthogonal zur Z-Achse 14 ausgelegt ist.

Wie in den Figuren 2 und 4 deutlich zu erkennen ist, weisen die Löttiegel 10 ein Oberteil 24 und ein Unterteil 26 auf, wobei das Oberteil 24 lösbar mit dem Unterteil 26 verbindbar ist und das Lotreservoir 16 und die Lötdüse 18 aufweist. Zur lösbaren Verbindung des Oberteils 24 mit dem Unterteil 26 kann eine in den Figuren nicht gezeigte Verbindungseinrichtung vorgesehen sein, die zur lösbaren Verbindung des Oberteils 24 und des Unterteils 26 ausgelegt ist. Dabei ist es beispielsweise denkbar, dass die Verbindungseinrichtung einen Bajonettverschluss und/oder einen Magnetverschluss umfasst. Es ist jedoch auch möglich, dass eine andersartige kraft- und/oder formschlüssige Verbindung gewählt wird. Das Oberteil 24 und das Unterteil 26 lassen sich dabei im Bereich einer in Figur 4 schematisch gezeigten Trennebene 27 voneinander trennen. Im Oberteil 24 ist der Förderkanal 12 der Lotpumpe 20 angeordnet, der zumindest abschnittsweise entlang einer Kreisbahn 28 (vgl. Figur 6) verläuft und einen Einlass 29 und einen Auslass 31 aufweist, wobei der Einlass 29 fluidisch mit dem Lotreservoir 16 verbunden ist und wobei der Auslass 31 fluidisch mit der Lötdüse 18 verbunden ist. Im Unterteil 26 ist eine Einrichtung zur Erzeugung eines bewegten Magnetfelds 30 der Lotpumpe 20 angeordnet, die wenigstens einen Permanentmagneten 32 umfasst. Die Einrichtung zur Erzeugung eines bewegten Magnetfelds 30 ist derart ausgelegt, dass der Permanentmagnet 32 im Betrieb entlang des Förderkanals 28 bewegt wird.

Beim Löttiegel 10 gemäß der Figuren 4 bis 6 umfasst die Einrichtung 30 eine Vielzahl von Permanentmagneten 32, die dem Förderkanal 12 alternierend mit einem voneinander verschiedenen Magnetpol 34, 36 zugewandt sind.

Die Permanentmagnete 32 sind dabei auf einer in den Figuren nicht gezeigten Magnetkreisbahn angeordnet, die konzentrisch zur Kreisbahn 28 des Förderkanals 12 angeordnet ist, wobei jeweils ein Permanentmagnet 32 mit einem Südpol 34 nach oben, d.h. dem Förderkanal 12 zugewandt angeordnet ist und der daneben angeordnete Permanentmagnet 32 mit einem Nordpol 36 nach oben angeordnet ist. Die Permanentmagnete 32 sind in Figur 5 auf einer Magnetscheibe 38 montiert, die ebenfalls deutlich in Figur 4 zu erkennen ist.

Der Förderkanal 12 wird, wie in Figur 4 und 5 zu erkennen ist, von einem nicht ferromagnetischen Material 40 begrenzt, in das eine Nut 42 eingebracht ist. Diese Nut 42 wird von einem Ring 44 aus ferromagnetischem Material verschlossen, wobei der Förderkanal 12 insgesamt von dem nicht ferromagnetischen Material 40 und dem ferromagnetischen Ring 44 begrenzt wird.

Die Einrichtung 30 zur Erzeugung eines bewegten Magnetfeldes ist ferner derart ausgelegt, dass die Permanentmagnete 32 im Betrieb um eine konzentrisch zur Kreisbahn 28 oder Magnetkreisbahn angeordnete Rotationsachse 46 rotieren. Durch Rotation der axial (parallel zur Richtung der Rotationsachse 46) unterhalb des Förderkanals 12 angeordneten Permanentmagnete 34 kann im Förderkanal 12 ein bewegtes Magnetfeld erzeugt werden, dass sich zwischen dem magnetischen oder ferromagnetischen Material 44 und den Permanentmagneten 32 ausbildet. Durch das bewegte Magnetfeld können im Betrieb der Lotpumpe 20 des Löttiegels 10 in einem elektrisch leitfähigen Fluid, insbesondere in einem flüssigen Lot, Wirbelströme erzeugt werden. Durch Erzeugung der Wirbelströme kann das elektrisch leitfähige Fluid bzw. das flüssige Lot entlang einer durch den Pfeil 48 in Figur 5 oder durch die Pfeile 50 in Figur 6 dargestellte Rotationsrichtung entlang des zumindest abschnittsweise entlang der Kreisbahn 28 verlaufenden Förderkanals 12 beschleunigt werden und somit kann eine Pumpenwirkung der Lotpumpe 20 bereitgestellt werden.

Zum Antrieb der Magnetscheibe 38 weist die Lotpumpe 20 einen in Figur 4 schematisch gezeigten Elektromotor 52 auf, welcher die Magnetscheibe 38 bzw. die Permanentmagnete 32 derart antreibt, dass diese um die Rotationsachse 46 rotieren.

Dadurch, dass das Oberteil 24 lösbar mit dem Unterteil 26 verbunden ist und das Lotreservoir 16 und die Lötdüse 18 aufweist, können die Bauteile des Löttiegels 10, die einem verstärkten Verschleiß unterliegen, leicht ausgewechselt werden.

Die in Figur 1 gezeigte Verfahreinrichtung 22 ist vorteilhafterweise am Unterteil 26 angeordnet und weist ein Fahrwerk 54 auf, das am Löttiegel 10 angeordnet ist, wobei eine Mehrzahl von Rädern 56 vorgesehen ist, die jeweils mit dem Fahrwerk 54 verbunden sind. Dabei sind die Löttiegel 10 selbstfahrend ausgebildet. Die in Figur 1 gezeigten Löttiegel 10 weisen ferner eine in den Figuren nicht gezeigte Antriebseinrichtung auf, die zum Antreiben der Räder 56 ausgebildet ist. Dabei ist denkbar, dass die Antriebseinrichtung bspw. als Elektromotor, Pneumatikmotor oder änhliches ausgebildet ist. Dabei ist es denkbar, dass die Antriebseinrichtung zum gemeinsamen und/oder unabhängigen Antreiben der Räder 56 ausgebildet ist. Darüber hinaus ist es möglich, dass die Verfahreinrichtung 22 derart ausgebildet ist, dass die einzelnen Räder 56 unabhängig voneinander anlenkbar sind, so dass sämtliche Räder 56 des Löttiegels 10 unabhängig voneinander angetrieben und gelenkt werden können. Vorteilhafterweise weist die Verfahreinrichtung 22 dazu eine in den Figuren nicht gezeigte Lenkeinrichtung auf, die zum unabhängigen Lenken der Räder 56 ausgelegt ist. Es ist bspw. denkbar, dass die Lenkeinrichtung einen Antrieb, insbesondere einen Elektromotor und ein Getriebe aufweist, wobei von dem Antrieb ein Lenkgetriebe angesteuert werden kann, das zur Auslenkung der Räder 56 in eine ausgelenkte Position ausgelegt ist.

Bei der Ausführungsform gemäß der Figuren 2 und 3 weisen die in den Figuren 4 bis 6 gezeigten Löttiegel 10 eine andere Verfahreinrichtung 22 auf. Diese Verfahreinrichtung 22 weist einen Antriebsabschnitt auf, der zumindest teilweise aus einem ferromagnetischen Material hergestellt ist und im Bereich eines der Lötdüse 18 abgewandten Bodens 58 des Löttiegels 10 angeordnet ist. Die in den Figuren 2 und 3 gezeigte Lötanlage 100 weist dabei eine Einrichtung 106 zur Erzeugung eines magnetischen Wanderfelds auf, wobei die Einrichtung zur Erzeugung eines magnetischen Wanderfelds 106 in der X-/Y-Ebene 104 des Maschinentischs 102 ausgelegt ist. Durch Erzeugen eines magnetischen Wanderfelds kann dann der Antriebsabschnitt aus ferromagnetischem Material und mit ihm der gesamte Löttiegel 10 innerhalb der Lötanlage 100 in der X-/Y-Ebene, d.h. orthogonal zur Lötdüse 18 bzw. zur Z-Achse 14 verlagert werden.

Die Lötanlage 100 weist ferner wenigstens einen Überdruckerzeuger 108 auf, der zur Erzeugung eines Druckgases ausgelegt ist, wobei im Maschinentisch 102 der Lötanlage 100 eine Vielzahl von in den Figuren nicht gezeigten Auslassdüsen angeordnet ist, wobei der Überdruckerzeuger 108 fluidisch mit den Auslassdüsen verbunden ist, so dass durch aus den Auslassdüsen ausströmendes Druckgas ein Luftkissen auf dem Maschinentisch erzeugt werden kann. Dabei ist es denkbar, dass als Druckgas Stickstoff (N₂) verwendet wird, wobei dieses inerte Druckgas dann mittels in den Löttiegeln 10 angeordneter Druckgasleitungen, die in den Figuren nicht gezeigt sind, hin zu den Lötdüsen 18 geleitet werden kann.

Die Löttiegel 10 weisen ein Gesamtgewicht von etwa 0,5 kg bis etwa 5 kg, vorzugsweise von etwa 1 kg bis etwa 3,5 kg aufweist. Somit kann einerseits eine Antriebsleistung der die Löttiegel 10 antreibenden Antriebe reduziert werden. Andererseits kann aufgrund der vergleichsweise geringen Massen der Löttiegel 10 eine Lagerung der Löttiegel 10 auf dem Maschinentisch 102 mittels des Luftkissens oder alternativ dazu mittels einer Magnetschwebeeinrichtung derart ermöglicht werden kann, dass die Löttiegel 10 auf dem Maschinentisch 102 mit keiner oder nahezu keiner Reibung gelagert werden können.

Zur Verflüssigung von im Lotreservoir 16 aufbewahrten Lots weisen die Löttiegel 10 ferner eine in Figur 4 gezeigte Heizeinrichtung 60 auf, die zumindest teilweise im Unterteil 26 angeordnet ist und die zur Beheizung des Lotreservoirs 16 ausgelegt ist.

Die Löttiegel 10 weisen ferner eine Zustelleinrichtung 62 auf, die zum relativen Verlagern der Lötdüse 18 entlang der Z-Achse 14 ausgebildet ist. Die Zustelleinrichtung 62 kann insbesondere zur Verstellung eines Abstands 64 zwischen der Lötdüse 18 und dem Unterteil 26 ausgelegt sein, so dass eine Art Z-Achsenantrieb in Richtung des Doppelpfeils 66 realisiert werden kann. Mit der Zustelleinrichtung 62 kann die Lötdüse 18 eines Löttiegels 10 gegenüber einer zu bearbeitenden Leiterplatte aus einer Ruheposition in eine Lötposition verlagert werden. Dabei ist es denkbar, dass die Zustelleinrichtung 62 elektrisch antreibbar ist.

Dabei weist die Lötanlage 100 eine Steuereinrichtung 110 auf, die zum Ansteuern der Verfahreinrichtungen 22 der Löttiegel 10 ausgelegt ist. Die Steuereinrichtung 110 ist ferner zum Ansteuern der Zustelleinrichtungen 62 der einzelnen Löttiegel ausgebildet. Folglich können mit einer derartigen Steuereinrichtung 110 einerseits zum Abfahren eines durch ein Lötprogramm definierten Verfahrwegs in der X-/Y-Ebene 104 die Verfahreinrichtungen 22 der Löttiegel 10 angesteuert werden, wobei andererseits durch Ansteuern der Zustelleinrichtungen 62 ein Ein- und Auskoppeln der Löttiegel 10 in ein jeweiliges Lötprogramm ermöglicht werden kann.

Die Lötanlage 100 weist darüber hinaus eine Positionserkennungseinrichtung 112 auf, die zur Positionserkennung der Löttiegel 10 im Arbeitsraum des Maschinentisches 102 ausgelegt ist. Die Positionserkennungseinrichtung 112 ist zur Übermittlung von Positionsdaten, die Informationen über die jeweilige Position der einzelnen Löttiegel 10 der Lötanlage 100 umfassen, an die Steuereinrichtung 110 ausgelegt und weist wenigstens einen Sensor auf, der zur Positionserkennung der Löttiegel 10 im Arbeitsraum des Maschinentisches 102 ausgelegt ist.

Ferner ist denkbar, dass die Positionserkennungseinrichtung 112 einen Laser und/oder eine Kamera 114 umfasst. Als Positionserkennungseinrichtung 112 können sämtliche Einrichtungen oder Vorrichtungen in Frage kommen, die zur automatisierten Entfernungs- und oder Positionserkennung von Objekten in Frage kommen.

Um Energie auf die einzelnen Löttiegel 10 übertragen zu können, weist die Lötanlage 100 eine Energieübertragungseinrichtung 114 auf, die zur Übertragung von elektrischer Energie zu den Löttiegeln 10 ausgelegt ist. Dabei ist es denkbar, dass die Energieübertragungseinrichtung 114 zur kabelgebundenen oder kabellosen Energieübertragung von elektrischer Energie zu den Löttiegeln 10 ausgebildet ist, wobei die Energieübertragungseinrichtung 114 bspw. zur induktiven oder kapazitiven Energieübertragung ausgelegt sein kann.

## Patentansprüche

1. Lötanlage (100) mit einer Löteinrichtung (10), mit einem Aufnahmemittel, das zur Aufbewahrung einer Flüssigkeit ausgelegt ist, mit einer Düse, und mit einer Pumpe, die zum Fördern der Flüssigkeit aus dem Aufnahmemittel (16) durch die Düse (18) in Richtung einer Z-Achse (14) ausgelegt ist, wobei eine Verfahreinrichtung zum Verfahren der Löteinrichtung (10) in einem Arbeitsraum vorgesehen ist, **dadurch gekennzeichnet, dass** der Arbeitsraum einen in einer X-/Y-Ebene angeordneten Maschinentisch (102) aufweist, wobei der Maschinentisch (102) eine in der X-/Y-Ebene liegende Fläche (104) aufweist, wobei diese X-/Y-Ebene orthogonal zu einer Z-Achse (14) ausgebildet ist, und dass die Löteinrichtung (10) eine Verfahreinrichtung (22) aufweist, die an der Löteinrichtung (10) angeordnet ist und die zum unabhängigen Verfahren der Löteinrichtung (10) auf der Fläche (104) des Maschinentisches (102) in der X-/Y-Ebene des Arbeitsraums ausgelegt ist.

2. Lötanlage (100) nach Anspruch 1, **dadurch gekennzeichnet, dass** die Löteinrichtung als Löttiegel (10) zum selektiven Wellenlöten oder als Fluxereinrichtung ausgebildet ist, dass das Aufnahmemittel als Lotreservoir (16), das zur Aufbewahrung eines Lots oder als Flussmitteltank zur Aufbewahrung von Flussmittel ausgelegt ist, dass die Düse als Lötdüse (18) oder als Fluxerdüse ausgebildet ist, und dass die Pumpe als Lotpumpe (20) oder als Flussmittelpumpe ausgebildet ist.

3. Lötanlage (100) nach Anspruch 1 oder 2, wobei die Löteinrichtung (10) ein Oberteil (24) und ein Unterteil (26) aufweist, wobei das Oberteil (24) lösbar mit dem Unterteil (26) verbindbar ist und das Aufnahmemittel (16) und die Düse (18) aufweist, wobei im Oberteil (24) ein Förderkanal (12) der Pumpe (20) angeordnet ist, der zumindest abschnittsweise entlang einer Kreisbahn (28) verläuft, und wobei im Unterteil (26) eine Einrichtung zur Erzeugung eines bewegten Magnetfelds (30) der Lotpumpe (20) angeordnet ist, die wenigstens einen Magneten (32) umfasst und derart ausgelegt ist, dass der Magnet (32) entlang des Förderkanals (12) bewegt wird.

4. Lötanlage (100) nach Anspruch 1, 2 oder 3, wobei die Verfahreinrichtung (22) ein Fahrwerk (54) aufweist, das an der Löteinrichtung (10) angeordnet ist, wobei wenigstens ein Rad (56) vorgesehen ist, das mit dem Fahrwerk (54) verbunden ist.

5. Lötanlage (100) nach Anspruch 4, wobei eine Antriebseinrichtung vorgesehen ist, die zum Antreiben des wenigstens einen Rads (56) ausgebildet ist.

6. Lötanlage (100) nach Anspruch 4 oder 5, wobei die Verfahreinrichtung (22) eine Mehrzahl von Rädern (56) aufweist.

7. Lötanlage (100) nach einem der vorherigen Ansprüche, wobei die Verfahreinrichtung (22) einen Antriebsabschnitt aufweist, der zumindest teilweise aus einem ferromagnetischen Material hergestellt ist, wobei der Antriebsabschnitt im Bereich eines der Düse (18) abgewandten Bodens (58) der Löteinrichtung (10) angeordnet ist, und wobei die Lötanlage (100) wenigstens eine Einrichtung zur Erzeugung eines magnetischen Wanderfelds (106) aufweist, wobei die zur Erzeugung eines magnetischen Wanderfelds (106) in der X-/Y-Ebene (104) des Maschinentischs (102) ausgelegt ist(Anspruch 13), wodurch der Antriebsabschnitt und mit ihm die gesamte Löteinrichtung in der X-/Y-Ebene verlagert werden.

8. Lötanlage (100) nach einem der vorherigen Ansprüche, wobei die Löteinrichtung (10) ein Gesamtgewicht von etwa 0,5 kg bis etwa 5 kg, vorzugsweise von etwa 1 kg bis etwa 3,5 kg aufweist.

9. Lötanlage (100) nach einem der vorherigen Ansprüche, wobei eine Zustelleinrichtung (62) vorgesehen ist, die zum relativen Verlagern der Düse (18) entlang der Z-Achse ausgebildet ist.

10. Lötanlage (100) nach einem der vorhergehenden Ansprüche, wobei eine Steuereinrichtung (110) vorgesehen ist, die zum Ansteuern der Verfahreinrichtung (22) der wenigstens einen Löteinrichtung (10) ausgelegt ist.

11. Lötanlage (100) nach einem der vorhergehenden Ansprüche, wobei eine Positionserkennungseinrichtung (112) vorgesehen ist, die zur Positionserkennung der wenigstens einen Löteinrichtung (10) im Arbeitsraum ausgelegt ist.

12. Lötanlage (100) nach Anspruch 11, wobei die Positionserkennungseinrichtung (112) wenigstens einen Sensor umfasst, der zur Positionserkennung der Löteinrichtung (10) im Arbeitsraum ausgelegt ist, und/oder wobei die Positionserkennungseinrichtung (112) einen Laser und/oder eine Kamera (114) umfasst.

13. Lötanlage (100) nach einem der vorhergehenden Ansprüche, wobei wenigstens eine Energieübertragungseinrichtung (114) vorgesehen ist, die zur Übertragung von elektrischer Energie zu der wenigstens einen Löteinrichtung (10) ausgelegt ist.

14. Lötanlage (100) nach Anspruch 13, wobei die Energieübertragungseinrichtung (114) zur induktiven oder kapazitiven Energieübertragung ausgelegt ist.

15. Lötanlage (100) nach einem der vorhergehenden Ansprüche, wobei wenigstens ein Überdruckerzeuger (108) vorgesehen ist, der zur Erzeugung eines Druckgases ausgelegt ist, und wobei wenigstens eine Auslassdüse im Maschinentisch (102) der Lötanlage (100) angeordnet ist, wobei der Überdruckerzeuger (108) fluidisch mit der wenigstens einen Auslassdüse verbunden ist.

## Claims

1. A soldering apparatus (100) comprising a soldering device (10), a receiving means adapted to hold a liquid, a nozzle, and a pump adapted to convey the liquid from the receiving means (16) through the nozzle (18) in the direction of a Z-axis (14), wherein a traversing means for traversing the soldering device (10) is provided in a working space, **characterized in that** the working space has a machine table (102) arranged in an X/Y plane, the machine table having a surface (104) lying in the X/Y plane, the X/Y plane being orthogonal to the Z axis (14), and **in that** the soldering device (10) has a traversing device (22) which is arranged on the soldering device (10) and which is designed for the independent traversing of the soldering device (10) on the surface of the machine table (102) in the X/Y plane of the working space.

2. Soldering apparatus (100) according to claim 1, **characterized in that** the soldering device is designed as a solder pot (10) for selective wave soldering or as a fluxing device, **in that** the receiving means is designed as a solder reservoir (16) which is designed for storing a solder or as a fluxing agent tank for storing fluxing agent, **in that** the nozzle is designed as a soldering nozzle (18) or as a fluxing agent nozzle, and **in that** the pump is designed as a solder pump (20) or as a fluxing agent pump.

3. Soldering apparatus (100) according to claim 1 or 2, wherein the soldering device (10) has an upper part (24) and a lower part (26), wherein the upper part (24) can be detachably connected to the lower part (26) and has the receiving means (16) and the nozzle (18), wherein a delivery channel (12) of the pump (20) is arranged in the upper part (24), which runs at least in sections along a circular path (28), and wherein a device for generating a moving magnetic field (30) of the solder pump (20) is arranged in the lower part (26), comprises at least one magnet (32) and is designed such that the magnet (32) is moved along the feed channel (12).

4. Soldering apparatus (100) according to claim 1, 2 or 3, the traversing device (22) having a running gear (54) which is arranged on the soldering device (10), at least one wheel (56) being provided which is connected to the running gear (54).

5. Soldering apparatus (100) according to claim 4, wherein a drive device is provided which is designed for driving the at least one wheel (56).

6. Soldering apparatus (100) according to claim 4 or 5, wherein the traversing means (22) comprises a plurality of wheels (56).

7. Soldering apparatus (100) according to one of the previous claims, the traversing device (22) having a drive section which is at least partially made of a ferromagnetic material, the drive section being arranged in the region of a bottom (58) of the soldering device (10) remote from the nozzle (18), and wherein the soldering equipment (100) has at least one device for generating a travelling magnetic field (106), which is designed to generate a travelling magnetic field (106) in the X/Y plane (104) of the machine table (102) (Claim 13), whereby the drive section and with it the entire soldering device are displaced in the X/Y plane.

8. Soldering apparatus (100) according to any of the foregoing, said soldering equipment (10) having a total weight of from about 0.5 kg to about 5 kg, preferably from about 1 kg to about 3.5 kg.

9. Soldering apparatus (100) according to one of the previous claims, wherein a feed means (62) is provided adapted for relatively displacing the nozzle (18) along the Z-axis.

10. Soldering apparatus (100) according to one of the preceding claims, wherein a control device (110) is provided which is designed for driving the traversing device (22) of the at least one soldering device (10).

11. Soldering apparatus (100) according to one of the preceding claims, wherein a position detection device (112) is provided which is designed for position detection of the at least one soldering device (10) in the working space.

12. Soldering apparatus (100) according to claim 11, wherein the position detection device (112) comprises at least one sensor which is designed for position detection of the soldering device (10) in the working space, and/or wherein the position detection device (112) comprises a laser and/or a camera (114).

13. Soldering apparatus (100) according to one of the preceding claims, wherein at least one power transmission device (114) is provided which is designed for transmitting electrical power to the at least one soldering device (10).

14. Soldering apparatus (100) according to claim 13, wherein the energy transfer device (114) is designed for inductive or capacitive energy transfer.

15. Soldering apparatus (100) according to one of the preceding claims, wherein at least one overpressure generator (108) is provided which is designed for generating a compressed gas, and wherein at least one outlet nozzle is arranged in the machine table (102) of the soldering apparatus (100), wherein the overpressure generator (108) is fluidically connected to the at least one outlet nozzle.

## Revendications

1. Appareil de brasage (100) comprenant un dispositif de brasage (10), un moyen de réception adapté pour recevoir un liquide, une buse et une pompe adaptée pour transporter le liquide du moyen de réception (16) à travers la buse (18) vers un axe Z (14), un dispositif de déplacement pour déplacer le dispositif de brasage (10) étant prévu dans un espace de travail, **caractérisé en ce que** l'espace de travail comporte une table de machine (102) disposée dans un plan X/Y, la table de machine ayant une surface (104) située dans le plan X/Y, le plan X/Y étant orthogonal à l'axe Z (14), et **en ce que** le dispositif de brasage (10) comporte un dispositif de déplacement (22) qui est disposé sur le dispositif de brasage (10) et qui est conçu pour le déplacement indépendant du dispositif de brasage (10) sur la surface de la table machine (102) dans le plan X/Y du poste de travail.

2. Appareil de brasage (100) selon la revendication 1, **caractérisée en ce que** le dispositif de brasage est conçu comme pot de brasage (10) pour le brasage sélectif à la vague ou comme dispositif de fluxage, **en ce que** le dispositif de réception est conçu comme réservoir de brasage (16) qui est conçu pour stocker une soudure ou un agent de fluxage, **en ce que** la buse est conçue comme buse à brasage (18) ou comme buse à agent de fluxage, et **en ce que** la pompe est conçue en pompe à brasage (20) ou en pompe à agent de fluxage.

3. Appareil de brasage (100) selon la revendication 1 ou 2, dans laquelle le dispositif de brasage (10) présente une partie supérieure (24) et une partie inférieure (26), dans laquelle la partie supérieure (24) peut être reliée de manière amovible à la partie inférieure (26) et présente les moyens de réception (16) et la buse (18), un canal de distribution (12) de la pompe (20) étant agencé dans la partie supérieure (24), qui s'étend au moins par sections le long d'un trajet circulaire (28), et dans lequel un dispositif pour générer un champ magnétique mobile (30) de la pompe à braser (20) est disposé dans la partie inférieure (26), comprend au moins un aimant (32) et est conçu de telle sorte que l'aimant (32) est déplacé le long du canal d'alimentation (12).

4. Appareil de brasage (100) selon la revendication 1, 2 ou 3, le dispositif de déplacement (22) comportant un train de roulement (54) disposé sur le dispositif de brasage (10), au moins une roue (56) étant prévue qui est reliée au train de roulement (54).

5. Appareil de brasage (100) selon la revendication 4, dans laquelle il est prévu un dispositif d'entraînement qui est conçu pour entraîner au moins une roue (56).

6. Appareil de brasage (100) selon la revendication 4 ou 5, dans lequel le moyen de déplacement (22) comprend une pluralité de roues (56).

7. Appareil de brasage (100) selon l'une des revendications précédentes, le dispositif de déplacement (22) présentant une section d'entraînement au moins partiellement constituée d'un matériau ferromagnétique, la section d'entraînement étant disposée dans la zone d'un fond (58) du dispositif de brasage (10) à distance de la buse (18), et dans lequel l'équipement de brasage (100) comporte au moins un dispositif pour générer un champ magnétique mobile (106), qui est conçu pour générer un champ magnétique mobile (106) dans le plan X/Y (104) de la table de machine (102) (revendication 13), la section de commande et, avec elle, l'ensemble du dispositif de brasage étant déplacés dans le plan X/Y.

8. Appareil de brasage (100) conformément à ce qui précède, ledit équipement de brasage (10) ayant un poids total d'environ 0,5 kg à environ 5 kg, de préférence d'environ 1 kg à environ 3,5 kg.

9. Appareil de brasage (100) selon l'une des revendications précédentes, dans lequel un moyen d'alimentation (62) est prévu pour déplacer relativement la buse (18) selon l'axe Z.

10. Appareil de brasage (100) selon l'une des revendications précédentes, un dispositif de commande (110) étant prévu pour entraîner le dispositif de déplacement (22) de l'au moins un dispositif de brasage (10).

11. Appareil de brasage (100) selon l'une des revendications précédentes, un dispositif de détection de position (112) étant prévu pour la détection de position de l'au moins un dispositif de brasage (10) dans la zone de travail.

12. Appareil de brasage (100) selon la revendication 11, dans laquelle le dispositif de détection de position (112) comprend au moins un capteur conçu pour la détection de position du dispositif de brasage (10) dans l'espace de travail, et/ou dans laquelle le dispositif de détection de position (112) comprend un laser et/ou une caméra (114).

13. Appareil de brasage (100) selon l'une des revendications précédentes, dans lequel il est prévu au moins un dispositif de transmission de puissance (114) qui est conçu pour transmettre de l'énergie électrique au au moins un dispositif de brasage (10).

14. Appareil de brasage (100) selon la revendication 13, le dispositif de transfert d'énergie (114) étant conçu pour le transfert d'énergie inductif ou capacitif.

15. Appareil de brasage (100) selon l'une des revendications précédentes, dans lequel il est prévu au moins un générateur de surpression (108) conçu pour générer un gaz comprimé, et dans lequel au moins une buse de sortie est disposée dans la table de machine (102) de l'appareil de brasage (100), le générateur de surpression (108) étant relié par fluide à ladite au moins une buse de sortie.
